# EUROPÄISCHE PATENTSCHRIFT

(11) **EP 3 585 645 B1**
(45) Veröffentlichungstag und Bekanntmachung des Hinweises auf die Patenterteilung: **09.06.2021**
(21) Anmeldenummer: 18707352.3
(22) Anmeldetag: 23.02.2018
(51) Int. Cl.: B60N 2/427, B60N 2/42, B60N 2/06

(54) **FAHRZEUGSITZKONSOLE**
VEHICLE SEAT CONSOLE
BASE DE SIÈGE DE VÉHICULE

(30) Priorität: 27.02.2017 DE 102017203177
(43) Veröffentlichungstag der Anmeldung: 01.01.2020
(73) Patentinhaber: Bayerische Motoren Werke Aktiengesellschaft, 80809 München (DE)
(72) Erfinder: MARTIN, Robert, 80807 München (DE); HUF, Andreas, 86356 Neusäß (DE)
(86) Internationale Anmeldenummer: PCT/EP2018/054527
(87) Internationale Veröffentlichungsnummer: WO 2018/154061

(56) Entgegenhaltungen:
- US-A- 3 858 934

## Beschreibung

### TECHNISCHES GEBIET

Die Erfindung betrifft eine Fahrzeugsitzkonsole nach dem Oberbegriff des Patentanspruchs 1. Sie betrifft weiterhin einen Fahrzeugsitz und ein mit einem Fahrzeugsitz ausgestattetes Fahrzeug.

### HINTERGRUND DER ERFINDUNG

Bei herkömmlichen Kraftfahrzeugen wird im Fall einer Kollision, beispielsweise bei einem Auffahrunfall, ein Großteil der Energie, die ein Passagier durch seine Masseträgheit auf den Sitz überträgt, über plastische Verformung der Lehnen- und Sitzseitenteile abgebaut. Dies geht mit einer Rückverlagerung der Lehne einher. Diese Rückverlagerung der Sitzlehne muss soweit begrenzt sein, dass der Sitz noch ausreichend Rückhalt gibt und der Passagier nicht aus dem Sitz rutscht. Bei sehr hohen Energieeinträgen, wie zum Beispiel bei einem Frontcrash beim rückwärtigen Sitzen, also wenn der Passagier mit dem Rücken zur Fahrtrichtung sitzt, kommt diese Bauweise an ihre Grenzen. Der Sitz kann die durch die Kollision eingebrachte Beschleunigungsenergie durch seine beschränkte Verformung nicht in dem Maße absorbieren, wie es erforderlich wäre, um die Beschleunigungswerte niedrig zu halten. Es werden neue Verformungswege in Fahrzeug-Längsrichtung benötigt, um die Insassenbeschleunigungswerte auch für eine solche Sitzanordnung zu begrenzen, insbesondere also bei einem Heckaufprall bei klassischer Sitzanordnung, bei einer Frontalkollision, wenn ein Passagier auf einem entgegen der Fahrtrichtung ausgerichteten Fahrzeugsitz sitzt oder wenn sich der Passagier in einer frontgerichteten Liegeposition befindet und sich dabei nicht in den Gurt sondern in das Sitzkissen abstützt.

### STAND DER TECHNIK

Aus der DE 100 33 340 C1 ist eine Sitzbefestigungsvorrichtung für ein Fahrzeug bekannt, die mindestens eine Schiene aufweist, in der ein Fahrzeugsitz bewegbar im Fahrzeug angeordnet ist und die wenigstens ein Fußelement aufweist, welches die Schiene mit einem Boden des Fahrzeugs verbindet. Jedes Fußelement ist als ein im Fall einer Kollision energieabsorbierendes Deformationselement ausgebildet.

Aus der DE 102 49 237 A1 ist eine Sitzanordnung eines Fahrzeugs mit einem Deformationselement für einen Heckaufprall bekannt. Der Fahrzeugsitz ist in einer Lagerschiene längsverschieblich gelagert, wobei die Lagerschiene am Fahrzeugunterbau derart befestigt ist, dass sie vorne längsverschieblich mit dem Fahrzeugunterbau verbunden ist und hinten längs- und nach oben verschieblich im Fahrzeugunterbau gelagert ist. Des Weiteren ist ein Deformationselement vorgesehen, das im Fall eines Heckaufpralls und bei einer Verlagerung der Lagerschiene relativ zum Fahrzeugunterbau energieabsorbierend wirkt. Dieses Deformationselement ist im Bereich des hinteren Endes der Lagerschiene zwischen dieser und dem Fahrzeugunterbau angeordnet.

Die DE 698 27 506 T2 zeigt und beschreibt einen Fahrzeugsitz, der eine Sitzlehnen-Neigungsverstellung aufweist, die mit Dämpfungseinrichtungen im Bereich der Anlenkung der Sitzlehne an den Sitz versehen ist, wobei die Sitzlehne im Falle eines Heckaufpralls in gedämpfter Weise eine entgegen der Fahrtrichtung gerichtete zweistufig gedämpfte Schwenkbewegung vollführt. Die Dämpfung des Heckaufprall-Impulses erfolgt hier durch eine gedämpfte Rückwärtsverschwenkung der Sitzlehne, was nur in einem kleinen Winkelbereich möglich ist, um zu verhindern, dass die auf dem Sitz sitzende Person auf einer zu schräg gestellten Rückenlehne nach hinten rutscht.

Weiterhin ist aus der US 3 858 934 A ein Fahrzeugsitz mit einer Dämpfungseinrichtung bekannt, die im Kollisionsfall bei sehr hohen auftretenden Kräften einen zusätzlichen Verfahrweg bereitstellt.

### DARSTELLUNG DER ERFINDUNG

Aufgabe der vorliegenden Erfindung ist es, eine gattungsgemäße Fahrzeugsitzkonsole anzugeben, die bei einer optimalen Abstützung einer auf dem Fahrzeugsitz sitzenden Person durch die Sitzlehne eine größtmögliche Dämpfung der auf die auf dem Fahrzeugsitz sitzende Person einwirkenden Impulskraft bewirkt, die durch eine Kollision auf das Fahrzeug übertragen wird. Des Weiteren sollen ein Fahrzeugsitz mit einer derartigen Sitzkonsole sowie ein Fahrzeug mit zumindest einem solchen Fahrzeugsitz angegeben werden.

Der auf die Fahrzeugsitzkonsole gerichtete Teil der Aufgabe wird gelöst mit den Merkmalen des Patentanspruchs 1.

Dazu ist bei einer Fahrzeugsitzkonsole, die versehen ist mit zumindest einem fahrzeugseitigen Führungselement und zumindest einem parallel zum fahrzeugseitigen Führungselement angeordneten sitzseitigen Führungselement sowie einer von einer Antriebseinrichtung mittels einer Übertragungseinrichtung beaufschlagten Längsverstelleinrichtung, die ausgestaltet ist, um eine Relativverstellung zwischen dem fahrzeugseitigen Führungselement und dem sitzseitigen Führungselement zu bewirken, vorgesehen, dass die Längsverstelleinrichtung und/oder die Übertragungseinrichtung mit zumindest einer Energieabsorptionseinrichtung versehen ist, die ausgebildet ist, um impulsartige Relativbewegungen zwischen dem fahrzeugseitigen Führungselement und dem sitzseitigen Führungselement zu dämpfen.

Erfindungsgemäß weist die Fahrzeugsitzkonsole eine Längsverstelleinrichtung mit einer nicht-selbsthemmenden translatorischen Bewegungseinheit auf oder bildet eine solche, die das fahrzeugseitige Führungselement und das sitzseitige Führungselement miteinander koppelt. Eine derartige Ausgestaltung der Längsverstelleinrichtung gestattet es, dass die über das fahrzeugseitige Führungselement in die Längsverstelleinrichtung eingeleitete Impulskraft bis zu der Energieabsorptionseinrichtung weitergeleitet wird. Der Kraftfluss zwischen dem fahrzeugseitigen Führungselement und der Energieabsorptionseinrichtung ist somit nicht durch selbsthemmende Elemente blockiert, so dass die Impulskraft, ohne irgendeine Blockade in relativ zueinander beweglichen Komponenten der Längsverstelleinrichtung und gegebenenfalls der Übertragungseinrichtung auslösen zu können, bis zur Energieabsorptionseinrichtung geleitet wird.

Weiter erfindungsgemäß ist die Energieabsorptionseinrichtung zwischen der Antriebseinrichtung und der nicht-selbsthemmenden translatorischen Bewegungseinheit angeordnet. Dadurch ist die Energieabsorptionseinrichtung im Kraftfluss so nahe wie möglich am Einleitungsort der Impulskraft vorgesehen.

Die Energieabsorptionseinrichtung sorgt dafür, dass impulsartige Kräfte, die über das fahrzeugseitige Führungselement, das beispielsweise von einer mit der Fahrzeugstruktur fest verbundenen Unterschiene einer Sitzbefestigungsvorrichtung gebildet ist, in die Fahrzeugsitzkonsole eingeleitet werden, gedämpft und somit abgeschwächt werden, bevor sie auf das sitzseitige Führungselement einwirken, das beispielsweise von einer mit einem Fahrzeugsitz verbundenen oder verbindbaren Oberschiene der Sitzbefestigungsvorrichtung gebildet ist. Derartige impulsartige Kräfte treten beispielsweise bei einer Fahrzeugkollision auf.

Weitere bevorzugte und vorteilhafte Ausgestaltungsmerkmale der erfindungsgemäßen Fahrzeugsitzkonsole sind Gegenstand der Unteransprüche 2 bis 6.

Dabei ist es von besonderem Vorteil, wenn die jeweilige translatorische Bewegungseinheit eine sich parallel zur Längserstreckung der Führungselemente verlaufende Zahnstange sowie ein mit der Zahnstange kämmendes Ritzel aufweist, wobei das Ritzel mit der Antriebseinrichtung mechanisch gekoppelt ist. Ein solcher Zahnstangenantrieb besitzt gegenüber herkömmlichen Schneckenwellenantrieben den Vorteil, dass er bei einwirkenden Impulskräften keine selbsthemmende Wirkung entfaltet.

Insbesondere dabei ist es sinnvoll, wenn die Energieabsorptionseinrichtung zumindest ein rotatorisches Kraftbegrenzungselement, beispielsweise einen Torsionsstab, aufweist. Ein solches rotatorisches Kraftbegrenzungselement kann Rotationskräfte, die von der Antriebseinrichtung im Wesentlichen gleichmäßig aufgebracht werden, um eine Längsverstellung zwischen den beiden Führungselementen zu bewirken, ohne größere Dämpfung oder Verzögerung übertragen, wohingegen sie impulsartig auftretende Kraftspitzen abfedert und damit dämpft. Das beispielsweise als Torsionsstab ausgebildete rotatorisches Kraftbegrenzungselement kann vorteilhafterweise auch mehrstufig ausgestaltet sein, um zum Beispiel eine progressive oder degressive Federwirkung zu erzielen und dadurch die energieabsorbierende Wirkung über den Zeitverlauf veränderlich zu gestalten, oder um auf unterschiedlich starke Energieeinträge reagieren zu können. Es kann auch vorgesehen sein, die Richtung der Kraftbegrenzung zu steuern, um so die Energieabsorptionseinrichtung daran anzupassen, ob ein Sitz in Fahrtrichtung ausgerichtet ist oder entgegen der Fahrtrichtung nach hinten gedreht ist. Das bedeutet, dass die Kraft-Weg-Kennlinie des rotatorischen Kraftbegrenzungselements oder einer rotatorischen Kraftbegrenzungselementenanordnung in den beiden entgegengesetzten Drehrichtungen unterschiedlich ist. Die Energieabsorptionsfähigkeit der Energieabsorptionseinrichtung, zum Beispiel die plastische Deformation des Torsionsstabs, kann auch verstellbar ausgestaltet sein, so dass in Abhängigkeit von der Sitzbelegung des Fahrzeugsitzes eine größere oder geringere oder gar keine Energieabsorptionswirkung vorgesehen sein kann.

Vorzugsweise weist die Energieabsorptionseinrichtung Wegbegrenzungsmittel für den Torsionsstab auf. Diese Wegbegrenzungsmittel dienen nicht nur dem Schutz der Energieabsorptionseinrichtung vor Zerstörung, sondern ermöglichen es außerdem, die gedämpfte Impulskraft kontrolliert weiterzuleiten.

Vorteilhaft ist auch eine Ausführungsform der erfindungsgemäßen Fahrzeugsitzkonsole, bei der zwischen der Antriebseinrichtung und der Energieabsorptionseinrichtung eine selbsthemmende Bewegungseinheit angeordnet ist. Die selbsthemmende Bewegungseinheit, die im Normalbetrieb eine gewünschte Fixierung der beweglichen Komponenten einer Sitzverstelleinrichtung bewirkt, wenn diese nicht betätigt wird, ist dadurch nicht in dem Kraftfluss zwischen der bei einer Kollision in die Längsverstelleinrichtung eingeleiteten Impulskraft und der Energieabsorptionseinrichtung enthalten und stört dort den Kraftfluss nicht, kann aber im Normalbetrieb die gewünschte selbsthemmende Wirkung auf die Längsverstelleinrichtung ausüben.

Dabei ist es vorteilhaft, wenn die selbsthemmende Bewegungseinheit von einem Schneckenwellengetriebe gebildet ist oder ein solches aufweist.

Die Erfindung ist außerdem auf einen Fahrzeugsitz mit einer erfindungsgemäßen Fahrzeugsitzkonsole sowie auf ein mit einem solchen Fahrzeugsitz ausgestattetes Fahrzeug, insbesondere ein Kraftfahrzeug, gerichtet, wobei sie nicht auf Automobile beschränkt ist, sondern auch in anderen Landfahrzeugen sowie in Luftfahrzeugen und in Wasserfahrzeugen einsetzbar ist.

Die erfindungsgemäße Grundidee, eine Energieabsorptionseinrichtung im Kraftfluss einer Sitz-Längsverstelleinrichtung zwischen einem Fahrzeugchassis oder einer Fahrzeugstruktur und einem darauf angebrachten, längsverstellbaren Fahrzeugsitz vorzusehen, ist nicht auf die hier beschriebene mechanische Längsverstelleinrichtung beschränkt. Sie kann ebenso realisiert sein, wenn die Längsverstelleinrichtung beispielsweise elektromagnetisch mittels eines Linearmotors erfolgt, wobei die Energieabsorptionseinrichtung dann von einer Wirbelstrombremse gebildet sein kann.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: ein Grundrissschema einer erfindungsgemäßen Sitzkonsole,
- Fig. 2: einen Ausschnitt einer Seitenansicht der Sitzkonsole in Richtung des Pfeils II in Fig. 1 und
Fig. 3 eine schematische Darstellung eines mit der erfindungsgemäßen Fahrzeugsitzkonsole ausgestatteten Beifahrersitzes mit Orientierung entgegen der Fahrtrichtung.

### DARSTELLUNG VON BEVORZUGTEN AUSFÜHRUNGSBEISPIELEN

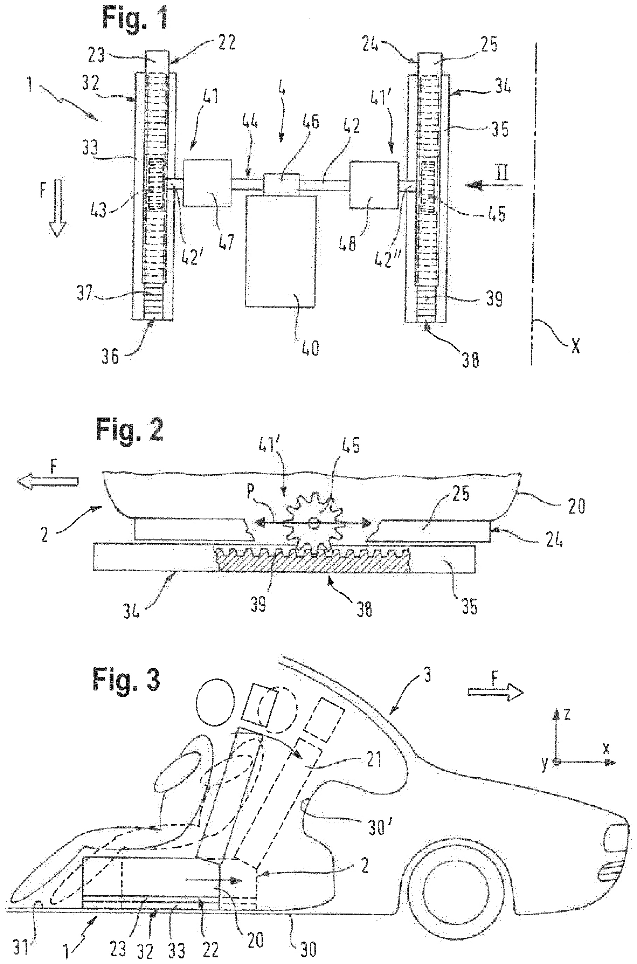

Fig. 1 zeigt im Grundriss schematisch eine Fahrzeugsitzkonsole gemäß der vorliegenden Erfindung. Die Fahrzeugsitzkonsole 1 verbindet einen Fahrzeugsitz 2 mit dem Chassis 30 eines Fahrzeugs 3, wie schematisch in Fig. 3 dargestellt ist. Dazu weist die Fahrzeugsitzkonsole in Fahrzeuglängsrichtung ausgerichtete Führungselemente 32, 34, nämlich jeweils eine mit dem Fahrzeugboden 31 fest verbundene rechte untere Führungsschiene 33 und eine ebenfalls mit dem Fahrzeugboden 31 fest verbundene linke untere Führungsschiene 35, auf. Diese unteren Führungsschienen 33, 35 stehen parallel zur Fahrzeuglängsachse X. Mit diesen unteren Führungsschienen 33, 35 sind am Fahrzeugsitz 2 angebrachte obere Führungsschienen 23, 25 in herkömmlicher Weise in Gleiteingriff. Diese oberen Führungsschienen 23, 25 bilden sitzseitige Führungselemente 22, 24. Zwischen den unteren Führungsschienen 33, 35 und den oberen Führungsschienen 23, 25 ist eine jeweils in den Figuren nicht näher gezeigte und beschriebene Gleitfläche ausgebildet, die vorteilhafterweis mit einem Gleitmittel versehen oder beschichtet ist. An Stelle einer Gleitfläche kann auch ein Wälzlager, zum Beispiel ein Kugellager, vorgesehen sein.

Innerhalb oder neben der rechten unteren Führungsschiene 33 und der linken unteren Führungsschiene 35 ist jeweils eine Zahnstange 36, 38 fahrzeugfest angebracht, die sich im Wesentlichen über die Länge der jeweiligen unteren Führungsschienen 33, 35 erstreckt. Die Verzahnung 37, 39 der jeweiligen Zahnstange 36, 38 ist dabei im gezeigten Beispiel nach oben gerichtet, so dass die Zähne zum Fahrzeugsitz 2 hin weisen.

Am Fahrzeugsitz 2 ist an der Unterseite des Sitzbodens 20 ein Sitzverstellmechanismus 4 angeordnet. Dieser Sitzverstellmechanismus 4 weist eine Antriebseinrichtung 40, beispielsweise einen Elektromotor, auf, der mit einer sich in Fahrzeugquerrichtung (y) erstreckenden Antriebswelle 42 gekoppelt ist und diese mit einer Antriebskraft beaufschlagt. Am jeweiligen linken bzw. rechten Ende der Antriebswelle 42 ist jeweils ein Zahnrad (Ritzel) 43, 45 drehfest mit Antriebswelle 42 verbunden, wobei das jeweilige Zahnrad 43, 45 so angeordnet ist, dass es oberhalb der jeweiligen Zahnstange 36, 38 des jeweils zugeordneten fahrzeugseitigen Führungselements 32, 34 liegt und mit der jeweiligen Verzahnung 37, 39 kämmt. Eine von der Antriebseinrichtung 40 beaufschlagte Drehung der Antriebswelle 42 bewirkt eine Drehung des am jeweiligen Ende der Antriebswelle 42 angebrachten Zahnrads 43, 45, welches dann aufgrund der Kämmung mit der jeweils zugeordneten Zahnstange 36, 38 in Fahrtrichtung F nach vorne oder nach hinten wandert und den Fahrzeugsitz 2 in diese Richtung mitnimmt, wie es durch den Doppelpfeil P in Fig. 2 symbolisiert ist. Die unteren Führungsschienen 33, 35, die oberen Führungsschienen 23, 25, die Zahnstangen 36, 38 und die Zahnräder 43, 45 bilden auf diese Weise jeweils eine Längsverstelleinrichtung 41, 41' für den Fahrzeugsitz 2. Die jeweilige Längsverstelleinrichtung 41, 41' bildet dabei eine nicht selbsthemmende translatorische Bewegungseinheit.

Die Antriebswelle 42 bildet eine Übertragungseinrichtung 44 für das von der Antriebseinrichtung 40 aufgebrachte Drehmoment zur jeweiligen Längsverstelleinrichtung 41, 41' hin.

Damit sich der Fahrzeugsitz 2 im Normalfall durch Aufbringen von gemäßigten äußeren Kräften nicht ungewollt verschieben kann, ist zwischen der Antriebseinrichtung 40 und der Antriebswelle 42 eine selbsthemmende Bewegungseinheit 46 vorgesehen, die beispielsweise einen Schneckenwellenantrieb aufweist.

Zwischen dieser selbsthemmenden Bewegungseinheit 46 und dem rechten Zahnrad 43 bzw. dem linken Zahnrad 45 der Längsverstelleinrichtung 41 ist jeweils eine Energieabsorptionseinrichtung 47, 48 vorgesehen, die im gezeigten Beispiel in die Antriebswelle 42 integriert ist. Beispielsweise ist die Antriebswelle 42 in diesem Bereich als Torsionsstab ausgebildet.

Im Falle einer stärkeren Kollision des Fahrzeugs 3 mit einem Hindernis oder einem anderen Fahrzeug, bei welcher die Kollisionskraft eine wesentliche Komponente in Fahrzeuglängsrichtung x aufweist, wird das Fahrzeug 3 durch die impulsartig auftretende Kollisionskraft positiv (Heckaufprall) oder negativ (Frontalaufprall) beschleunigt. Bei dieser Beschleunigung behält der Fahrzeugsitz 2 mit der darauf sitzenden Person aufgrund der Trägheitsmasse dieser Person und des Fahrzeugsitzes 2 beim erfindungsgemäßen Fahrzeugsitz zunächst die ursprüngliche Geschwindigkeit bei, während das Fahrzeug 3 bereits der von der kollisionsbedingt ausgeübten Beschleunigung ausgelösten Geschwindigkeitsänderung unterliegt. Dies führt zu einer Relativbewegung der mit dem Fahrzeugchassis 30 fest verbundenen fahrzeugseitigen Führungselemente 32, 34 und der mit dem Fahrzeugsitz 2 fest verbundenen sitzseitigen Führungselemente 22, 24. Dabei wälzt das jeweilige Zahnrad 43, 45 auf der zugeordneten Zahnstange 36, 38 ab und bewirkt eine Drehbewegung im jeweiligen äußeren Abschnitt 42', 42" der Antriebswelle 42. Diese Drehbewegung führt zu einer Torsion in der jeweiligen Energieabsorptionseinrichtung 47, 48, beispielsweise in dem dort vorgesehenen Torsionsstab. Das vom jeweiligen äußeren Abschnitt 42', 42" der Antriebswelle impulsartig aufgebrachte Drehmoment wird dadurch abgefedert und gedämpft. So kann sich das jeweilige Zahnrad 43, 45-angetrieben von der sich kollisionsbedingt relativ zur Zahnradachse bewegenden Zahnstange 37, 39 - geringfügig verdrehen ohne dass sich die Zahnradachse, also die Antriebswelle 42, in Richtung des in Fig. 2 gezeigten Doppelpfeils P sofort und mit derselben impulsartigen Beschleunigung mitbewegt. Durch die von der jeweiligen Energieabsorptionseinrichtung 47, 48 ausgeübte Dämpfung dieses impulsartigen Stoßes erfolgt die Bewegung der Zahnradachse in Richtung des Doppelpfeils P zeitlich verzögert und mit einer geringeren, weil gedämpften, Beschleunigung. Der kollisionsbedingte Beschleunigungsimpuls wird somit verzögert und gedämpft auf den Fahrzeugsitz und damit auf die auf dem Fahrzeugsitz sitzende Person übertragen.

Fig. 3 zeigt in schematischer Darstellung die Anordnung eines Beifahrersitzes mit Blickrichtung entgegen der Fahrtrichtung F, das heißt, dass der Fahrzeugsitz 2 mit seiner Sitzlehne 21 zur Armaturentafel 30' des Fahrzeugs 3 weist. Dabei zeigt die Darstellung des Fahrzeugsitzes 2 und der darauf sitzenden Person mit durchgezogenen Linien die normale Sitzposition an und die Darstellung mit gestrichelten Linien, die bei einer Frontalkollision auftretende Verschiebung des Fahrzeugsitzes 2 mit der darauf sitzenden Person in Fahrtrichtung F nach vorne, die beim erfindungsgemäßen Fahrzeugsitz 2 durch die erfindungsgemäße Fahrzeugsitzkonsole ermöglicht wird. Dabei ist zu erkennen, dass die Neigungsänderung der Fahrzeugsitzlehne 21 nur in geringem Maße auftritt. Bei einem herkömmlichen Fahrzeugsitz, bei welchem der Sitzboden 20 im Falle einer Kollision starr mit dem Fahrzeug verbunden ist, müssten die massenträgheitsbedingten, von der Person ausgeübten Kräfte allein von der Fahrzeugsitzlehne 21 abgefangen werden, was zu einer stärkeren Lehnenneigung in Richtung zum Armaturenbrett 30' hin bis zu einer Kollision der Fahrzeugsitzlehne 21 mit dem Armaturenbrett 30' führen würde.

Auch wenn die Erfindung hier anhand des rechten vorderen Fahrzeugsitzes, der bei linksgesteuerten Fahrzeugen dem Beifahrersitz entspricht, beschrieben worden ist, kann sie an jedem anderen Fahrzeugsitz in der vorderen Sitzreihe, in der hinteren Sitzreihe oder in einer mittleren Sitzreihe realisiert sein. Auch ist der Einsatz der beschriebenen Erfindung unabhängig davon, ob der Sitz in Fahrtrichtung oder entgegen die Fahrtrichtung weist.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen im Rahmen des durch die Ansprüche festgelegten Schutzbereichs annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeugsitzkonsole
- 2: Fahrzeugsitz
- 3: Fahrzeug
- 22: sitzseitiges Führungselement
- 23: obere Führungsschiene
- 24: sitzseitiges Führungselement
- 25: obere Führungsschien
- 30: Chassis
- 30': Armaturenbrett
- 31: Fahrzeugboden
- 31': Armaturentafel
- 32: fahrzeugseitiges Führungselement
- 33: untere Führungsschiene
- 34: fahrzeugseitiges Führungselement
- 35: untere Führungsschiene
- 36: Zahnstange
- 37: Verzahnung
- 38: Zahnstange
- 39: Verzahnung
- 40: Antriebseinrichtung
- 41: Längsverstelleinrichtung
- 41': Längsverstelleinrichtung
- 42: Antriebswelle
- 42': äußerer Abschnitt
- 42": äußerer Abschnitt
- 43: Zahnrad (Ritzel)
- 44: Übertragungseinrichtung
- 45: Zahnrad (Ritzel)
- 46: selbsthemmende Bewegungseinheit
- 47: Energieabsorptionseinrichtung
- 48: Energieabsorptionseinrichtung
- P: Doppelpfeil

## Patentansprüche

1. Fahrzeugsitzkonsole mit zumindest einem fahrzeugseitigen Führungselement (32, 34) und zumindest einem parallel zum fahrzeugseitigen Führungselement (32, 34) angeordneten sitzseitigen Führungselement (22, 24) sowie einer von einer Antriebseinrichtung (40) mittels einer Übertragungseinrichtung (44) beaufschlagten Längsverstelleinrichtung (41, 41'), die ausgestaltet ist, um eine Relativverstellung zwischen dem fahrzeugseitigen Führungselement (32, 34) und dem sitzseitigen Führungselement (22, 24) zu bewirken, wobei die Längsverstelleinrichtung (41, 41') und/oder die Übertragungseinrichtung (44) mit zumindest einer Energieabsorptionseinrichtung (47, 48) versehen ist, die ausgebildet ist, um impulsartige Relativbewegungen zwischen dem fahrzeugseitigen Führungselement (32, 34) und dem sitzseitigen Führungselement (22, 24) zu dämpfen,
**dadurch gekennzeichnet,**
**dass** die Längsverstelleinrichtung (41, 41') eine nicht-selbsthemmende translatorische Bewegungseinheit aufweist oder eine solche bildet, die das fahrzeugseitige Führungselement (32, 34) und das sitzseitige Führungselement (22, 24) miteinander koppelt und dass die Energieabsorptionseinrichtung (47, 48) zwischen der Antriebseinrichtung (40) und der nicht-selbsthemmenden translatorischen Bewegungseinheit angeordnet ist.

2. Fahrzeugsitzkonsole nach Anspruch 1,
**dadurch gekennzeichnet,**
**dass** die jeweilige translatorische Bewegungseinheit eine sich parallel zur Längserstreckung der Führungselemente (22, 24, 32, 34) verlaufende Zahnstange (36, 37) sowie ein mit der Zahnstange (36, 37) kämmendes Ritzel (43, 45) aufweist, wobei das Ritzel (43, 45) mit der Antriebseinrichtung (40) mechanisch gekoppelt ist.

3. Fahrzeugsitzkonsole nach Anspruch 1 oder 2,
**dadurch gekennzeichnet,**
**dass** die Energieabsorptionseinrichtung (47, 48) zumindest einen Torsionsstab aufweist.

4. Fahrzeugsitzkonsole nach Anspruch 3,
**dadurch gekennzeichnet,**
**dass** die Energieabsorptionseinrichtung (47, 48) Wegbegrenzungsmittel für den Torsionsstab aufweist.

5. Fahrzeugsitzkonsole nach einem der vorhergehenden Ansprüche, **dadurch gekennzeichnet,**
**dass** zwischen der Antriebseinrichtung (40) und der Energieabsorptionseinrichtung (47, 48) eine selbsthemmende Bewegungseinheit (46) angeordnet ist.

6. Fahrzeugsitzkonsole nach Anspruch 5,
**dadurch gekennzeichnet,**
**dass** die selbsthemmende Bewegungseinheit (46) von einem Schneckenwellengetriebe gebildet ist oder ein solches aufweist.

7. Fahrzeugsitz mit einer Fahrzeugsitzkonsole nach einem der vorhergehenden Ansprüche.

8. Fahrzeug, insbesondere Kraftfahrzeug, mit zumindest einem Fahrzeugsitz nach Anspruch 7.

## Claims

1. Vehicle seat console comprising at least one vehicle-side guide element (32, 34) and at least one seat-side guide element (22, 24) arranged parallel to the vehicle-side guide element (32, 34) and a longitudinal adjustment device (41, 41') which is acted upon by a drive device (40) by means of a transmission device (44) and is configured to bring about a relative adjustment between the vehicle-side guide element (32, 34) and the seat-side guide element (22, 24), wherein the longitudinal adjustment device (41, 41') and/or the transmission device (44) is provided with at least one energy absorption device (47, 48) which is designed to damp impulse-like relative movements between the vehicle-side guide element (32, 34) and the seat-side guide element (22, 24),
**characterized**
**in that** the longitudinal adjustment device (41, 41') has a non-self-locking translatory movement unit or forms such a movement unit, which couples the vehicle-side guide element (32, 34) and the seat-side guide element (22, 24) to each other, and in that the energy absorption device (47, 48) is arranged between the drive device (40) and the non-self-locking translatory movement unit.

2. Vehicle seat console according to Claim 1,
**characterized**
**in that** the respective translatory movement unit has a rack (36, 37) running parallel to the longitudinal extent of the guide elements (22, 24, 32, 34) and a pinion (43, 45) meshing with the rack (36, 37), wherein the pinion (43, 45) is mechanically coupled to the drive device (40) .

3. Vehicle seat console according to Claim 1 or 2,
**characterized**
**in that** the energy absorption device (47, 48) has at least one torsion bar.

4. Vehicle seat console according to Claim 3,
**characterized**
**in that** the energy absorption device (47, 48) has travel-limiting means for the torsion bar.

5. Vehicle seat console according to one of the preceding claims,
**characterized**
**in that** a self-locking movement unit (46) is arranged between the drive device (40) and the energy absorption device (47, 48).

6. Vehicle seat console according to Claim 5,
**characterized**
**in that** the self-locking movement unit (46) is formed by a worm shaft mechanism or has such a mechanism.

7. Vehicle seat comprising a vehicle seat console according to one of the preceding claims.

8. Vehicle, in particular motor vehicle, comprising at least one vehicle seat according to Claim 7.

## Revendications

1. Console de siège de véhicule comprenant au moins un élément de guidage côté véhicule (32, 34), au moins un élément de guidage côté siège (22, 24) disposé parallèlement à l'élément de guidage côté véhicule (32, 34) et un dispositif de réglage longitudinal (41, 41') qui est conçu pour effectuer un réglage relatif entre l'élément de guidage côté véhicule (32, 34) et l'élément de guidage côté siège (22, 24), le dispositif de réglage longitudinal (41, 41') et/ou le dispositif de transmission (44) étant pourvus d'au moins un dispositif d'absorption d'énergie (47, 48) qui est conçu pour amortir des mouvements relatifs en forme d'impulsion entre l'élément de guidage côté véhicule (32, 34) et l'élément de guidage côté siège (22, 24), **caractérisée en ce que**
le dispositif de réglage longitudinal (41, 41') comporte ou forme une unité de mouvement de translation non autobloquante qui accouple l'élément de guidage côté véhicule (32, 34) et l'élément de guidage côté siège (22, 24) l'un à l'autre et
le dispositif d'absorption d'énergie (47, 48) est disposé entre le dispositif d'entraînement (40) et l'unité de mouvement de translation non autobloquante.

2. Console de siège de véhicule selon la revendication 1,
**caractérisée en ce que**
l'unité de mouvement de translation respective comporte une crémaillère (36, 37) qui s'étend parallèlement à l'extension longitudinale des éléments de guidage (22, 24, 32, 34) et un pignon (43, 45) qui s'engrène avec la crémaillère (36, 37), le pignon (43, 45) étant accouplé mécaniquement au dispositif d'entraînement (40).

3. Console de siège de véhicule selon la revendication 1 ou 2,
**caractérisée en ce que**
le dispositif d'absorption d'énergie (47, 48) comporte au moins une barre de torsion.

4. Console de siège de véhicule selon la revendication 3,
**caractérisée en ce que**
le dispositif d'absorption d'énergie (47, 48) comporte des moyens de limitation de course destinés à la barre de torsion.

5. Console de siège de véhicule selon l'une des revendications précédentes,
**caractérisée en ce que**
une unité de mouvement autobloquante (46) est disposée entre le dispositif d'entraînement (40) et le dispositif d'absorption d'énergie (47, 48).

6. Console de siège de véhicule selon la revendication 5,
**caractérisée en ce que**
l'unité de mouvement autobloquante (46) est formée par une transmission à vis sans fin ou comporte une telle transmission.

7. Siège de véhicule comprenant une console de siège de véhicule selon l'une des revendications précédentes.

8. Véhicule, notamment véhicule automobile, comprenant au moins un siège de véhicule selon la revendication 7.
